# EUROPÄISCHE PATENTANMELDUNG

(11) **EP 1 136 347 A1**
(43) Veröffentlichungstag der Anmeldung: **26.09.2001**
(21) Anmeldenummer: 00810232.9
(22) Anmeldetag: 20.03.2000
(51) Int. Cl.: B62D 33/04, B62D 33/06, B62D 23/00

(54) **Kabine mit einem Gerippe, insbesondere zum Transportieren von Personen**

(71) Anmelder: Carrosserie Gangloff AG, 3008 Bern (CH)
(72) Erfinder: Bieri, Hannes, 3145 Niederscherli (CH)
(74) Vertreter: BOVARD AG - Patentanwälte

(57) **Zusammenfassung**

Bei einer Kabine, insbesondere für Fahrzeuge zum Transportieren von Personen, ist ein Gerippe vorgesehen, das aus miteinander verbundenen Hauptprofilen (2) und Nebenprofilen (3) gebildet ist. In das Gerippe sind plattenförmige Elemente als Wandung, Fenster und/oder Türen einsetzbar. Die Hauptprofile (2) sind mit mindestens einem Steg (4; 5) ausgestattet, an welchem Steg (4; 5) Knotenbleche (8) zur Verbindung mit benachbarten Profilen befestigbar sind. Die Knotenbleche (8) weisen eine erste Fläche (9) und eine abgestufte Fläche (10) auf. Die abgestufte Fläche (10) bildet mit einer Fläche des Steges (4; 5) eine gemeinsame Fläche, auf welche ein mit dem Hauptprofil (2) zu verbindendes Nebenprofil (3) aufliegt und mittels Verbindungsmitteln (21) mit dem Knotenblech (8) verbindbar ist.

## Beschreibung

Die vorliegende Erfindung bezieht sich auf eine Kabine, insbesondere für Fahrzeuge zum Transportieren von Personen, welche Kabine ein Gerippe von miteinander verbundenen Profilen umfasst, gemäss dem Oberbegriff des Patentanspruchs 1.

Derartige Kabinen sind bekannt. Diese weisen ein Gerippe von miteinander verbundenen Profilen auf, an welchen plattenförmige Elemente anbringbar sind, die als Wandung, Fenster, Türen oder dgl. ausgebildet sind.

Eine erste Möglichkeit, die Profile des Gerippes miteinander zu verbinden, besteht darin, dass diese Profile miteinander verschweisst sind. Dies weist aber den Nachteil auf, dass dadurch ein Verzug des Gerippes auftreten kann. Des weiteren müssen durch die Schweissverbindungen auch Festigkeitseinbussen in Kauf genommen werden. Deshalb wird ein Verschweissen der Profile zur Bildung eines Gerippes kaum mehr praktiziert.

Eine weitere Möglichkeit zum Verbinden der Profile zu einem Gerippe kann durch ein Schraubsystem erhalten werden. Ein derartiges System ist beispielsweise aus der EP-A-0 685 381 bekannt. Dieses Schraubsystem weist den Nachteil auf, dass die Schrauben auf Zug belastet werden, so dass bei einer eventuellen Setzung des Leichtmetalls, aus dem die Profile gebildet sind, sich die Verbindung lockern kann. Mit diesem System sind im Prinzip auch nur rechtwinklige Verbindungen möglich, gewölbte oder kubische Fahrzeugseitenflächen sind nur bedingt herstellbar.

Als weitere Möglichkeit einer Verbindung der Profile zu einem Gerippe dienen auch Nietverbindungen, die jedoch bei der Verwendung von Hohlprofilen zum Aufbau des Gerippes ein Schlitzen dieser Profile erfordern, in welche die Nietwinkel eingesetzt werden können. Dies erfordert einen grossen Arbeitsaufwand zur Vorbereitung dieser Profile.

Die Aufgabe der vorliegenden Erfindung besteht darin, die Profile für ein Gerippe zur Bildung einer Kabine, insbesondere für Fahrzeuge zum Transportieren von Personen so zu gestalten, dass die Profile in einfacher Weise miteinander verbunden werden können, ohne dass ein grosser Arbeitsaufwand zur Vorbereitung der Profile erforderlich ist.

Erfindungsgemäss erfolgt die Lösung dieser Aufgabe durch die im Patentanspruch 1 aufgeführten Merkmale.

Mit dieser Lösung wird eine steife, rüttelfeste Verbindung erhalten, die Profile für den Aufbau des Gerippes müssen nur auf Länge geschnitten werden, die Profile können ohne weiteres gebogen werden, die Verbindung von Profilen kann ohne weiteres in beliebigen Winkeln erfolgen. Somit sind bombierte oder kubische Seitenwandgerippe für eine entsprechende Kabine problemlos herstellbar.

In vorteilhafter Weise sind die miteinander verbundenen Hauptprofile und Nebenprofile so ausgestaltet, dass die nach aussen bzw. innen gerichtete Fläche der Hauptprofile und die entsprechende Fläche der Nebenprofile, auf welchen die plattenförmigen Elemente aufliegen, eine weitere gemeinsame Fläche bilden. Dadurch wird das Anbringen der plattenförmigen Elemente sehr vereinfacht, da keine Abstufungen am Gerippe vorhanden sind.

An den Hauptprofilen können jeweils mehrere Stege angeordnet sein, die bezüglich des entsprechenden Hauptprofils einander gegenüberliegend sind und/oder einen Winkel bilden. Dadurch können Verbindungen von Profilen erhalten werden, die praktisch jeden Winkel einschliessen können, wodurch die Vielfalt zur Ausgestaltung einer entsprechenden Kabine sehr gross wird.

Eine weitere vorteilhafte Ausgestaltung der Erfindung besteht darin, dass zu jedem Steg am Hauptprofil ein dazu parallel verlaufender weiterer Steg angebracht ist. Dadurch können die Knotenbleche zwischen die beiden Stege eingesetzt werden, wodurch in optimaler Weise eine Verbindung dieser Knotenbleche mit den Hauptprofilen erhalten wird.

In vorteilhafter Weise sind die Nebenprofile jeweils aus zwei Profilstücken gebildet, die bezüglich der zwischen den beiden Stegen angebrachten Knotenbleche zueinander parallel verlaufend angebracht sind. Dadurch wird eine einfache Befestigung der Nebenprofile an den Knotenblechen erreicht, die mit geringem Arbeitsaufwand erhalten wird.

Besonders einfach wird der Aufbau des Gerippes, wenn die Hauptprofile im wesentlichen aus einem Hohlprofil bestehen, während die Nebenprofile jeweils aus einem U-Profil mit an den beiden Schenkeln angebrachten flanschförmigen Vorsprüngen gebildet sind.

Eine weitere vorteilhafte Ausgestaltung der Erfindung besteht darin, dass die Verbindungsmittel aus Nieten bestehen, die in an den Profilen und Knotenblechen angebrachten Durchgangsbohrungen eingesetzt werden können. Diese Durchgangsbohrungen können in einfacher Weise beim Aufbau des Gerippes angebracht werden, wodurch eine grosse Flexibilität bei der Gestaltung und dem Aufbau der Gerippe erhalten wird. Insbesondere stören die Köpfe der Nieten das Anbringen der plattenförmigen Elemente in keiner Weise, da sich diese in einer zurückversetzten Fläche befinden.

Die paarweise angeordneten Nebenprofile können in vorteilhafter Weise mit dazwischen eingesetzten Verbindungsstegen versteift werden.

Eine weitere vorteilhafte Ausgestaltung der Erfindung besteht darin, dass die Hauptprofile und/oder die Nebenprofile in den gemeinsamen Flächen, auf welchen die plattenförmigen Elemente aufliegen, mit vorstehenden Rippen versehen sind, an welchen die eingesetzten plattenförmigen Elemente stirnseitig anstossen. Dadurch kann beispielsweise eine Fensterscheibe auf das Gerippe aufgeklebt werden, die Kanten sind durch die vorstehenden Rippen geschützt.

Durch die Einfachheit, wie die Hauptprofile und die Nebenprofile ausgebildet sind, können diese ohne weiteres gebogen werden, auch die gebogenen Profile können in optimaler Weise mit den entsprechenden Knotenblechen miteinander verbunden werden.

Ausführungsformen der vorliegenden Erfindung werden nachfolgend anhand der beiliegenden Zeichnung beispielhaft näher erläutert.

Es zeigt:
Fig. 1 in räumlicher Darstellung einen Teil eines Gerippes mit zwei miteinander verbundenen Hauptprofilen und einem Nebenprofil, das mit dem Knotenblech als Einzelteil dargestellt ist;
Fig. 2 in räumlicher Darstellung einen Teil des Gerippes, bestehend aus einem gebogenen Hauptprofil und daran befestigtem Nebenprofil;
Fig. 3 in räumlicher Darstellung einen Teil eines Gerippes, bestehend aus einem Hauptprofil und daran befestigtem Nebenprofil, das zum Hauptprofil winklig angebracht ist;
Fig. 4 in räumlicher Darstellung einen Teil eines Gerippes mit einem Hauptprofil, das eine Ecke bildet und daran befestigten Nebenprofilen; und
Fig. 5 in räumlicher Darstellung einen Teil eines Gerippes mit einem eine Biegung aufweisenden Hauptprofil und daran befestigten Nebenprofilen, mit am Hauptprofil angebrachter Rippe.

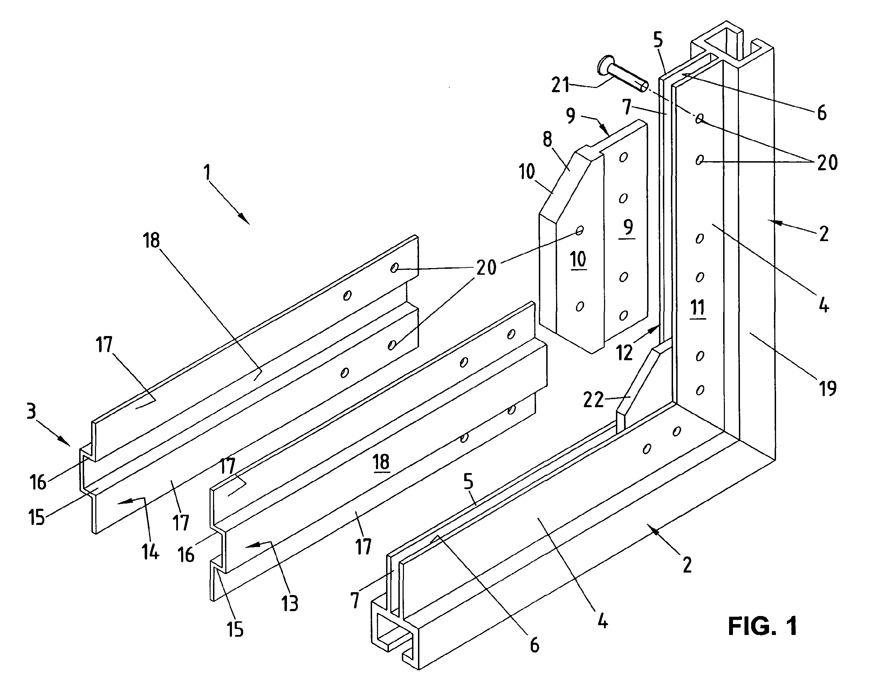

Das Gerippe 1, von dem in Fig. 1 ein Teil ersichtlich ist, und welches als Grundstruktur für den Aufbau einer Kabine, insbesondere für Fahrzeuge zum Transportieren von Personen vorgesehen ist, besteht aus Hauptprofilen 2 und Nebenprofilen 3. Die Hauptprofile 2 sind mit einem Steg 4 und einem dazu parallel verlaufenden weiteren Steg 5 ausgestattet. Die eine Fläche 6 des Steges 4 und die eine Fläche 7 des weiteren Steges 5 sind gegeneinander gerichtet und bilden somit eine Fuge.

Zwischen dem Steg 4 und dem weiteren Steg 5 wird ein Knotenblech 8 eingeschoben. Dieses Knotenblech 8 weist auf beiden Seiten jeweils eine erste Fläche 9 auf, sowie jeweils eine zu dieser ersten Fläche 9 abgestufte Fläche 10. Die beiden ersten Flächen 9 des Knotenbleches 8 liegen, wenn das Knotenblech 8 zwischen die beiden Stege 4 und 5 eingeschoben ist, an der einen Fläche 6 des Steges 4 bzw. an der einen Fläche 7 des Steges 5 an. Die abgestuften Flächen 10 des Knotenbleches 8 bilden mit der anderen Fläche 11 des Steges 4, die der einen Fläche 6 gegenüberliegend ist und mit der anderen Fläche 12 des weiteren Steges 5, die gegenüberliegend der einen Fläche 7 ist, jeweils eine gemeinsame Fläche.

Auf diese gemeinsamen Flächen, gebildet durch die andere Fläche 11 des Steges 4 mit der abgestuften Fläche 10 bzw. gebildet durch die andere Fläche 12 des Steges 5 mit der abgestuften Fläche 10 wird jeweils ein Profilstück 13 bzw. 14 aufgelegt, welche beiden Profilstücke 13 und 14 das Nebenprofil 3 bilden. Die beiden Profile 13 und 14 weisen eine U-Form auf, wobei an den beiden Schenkeln 15 und 16 jeweils ein flanschförmiger Vorsprung 17 angeordnet ist. Die flanschförmigen Vorsprünge 17 kommen jeweils auf die abgestufte Fläche 10 des Knotenbleches 8 und die andere Fläche 11 des Steges 4 bzw. die andere Fläche 12 des Steges 5 zu liegen. Die Schenkel 15 und 16 der Profile 13 und 14 sind jeweils über einen Verbindungssteg 18 miteinander verbunden.

Die jeweils dem Knotenblech 8 abgewandten Flächen des Verbindungssteges 18 bilden mit den Flächen 19 der Hauptprofile eine weitere gemeinsame Fläche. Auf diesen weiteren gemeinsamen Flächen können in bekannter Weise die plattenförmigen Elemente, die der Verkleidung des Gerippes 1 dienen, aufgebracht und mit den Profilen verbunden werden.

Das Knotenblech, die Stege 4 und 5 des Hauptprofils 2 und die Profile 13 und 14, welche das Nebenprofil 3 bilden, werden mit Durchgangsbohrungen 20 versehen, in welche jeweils ein Nietbolzen 21 eingesetzt wird, der vernietet wird. Die Nietköpfe der so gebildeten Nietverbindung sind absolut nicht störend, da die plattenförmigen Elemente auf der weiteren gemeinsamen Fläche aufliegen, welche gegenüber der Fläche, auf welcher die Nietköpfe abgestützt sind, überstehend ist.

Die Verbindung zwischen zwei Hauptprofilen 2 kann, wie ebenfalls aus Fig. 1 ersichtlich ist, durch ein einfaches Knotenblech 22 erreicht werden, das zwischen die beiden Stege 4 und 5 der beiden zu verbindenden Hauptprofile 2 eingesetzt wird, und wird mit Durchgangsbohrungen versehen und vernietet.

Zur Herstellung eines Gerippes 1, bestehend aus diesen beschriebenen Hauptprofilen 2 und den Nebenprofilen 3 müssen diese jeweils nur auf Länge und in Gehrung geschnitten werden. Danach kann das Gerippe aufgebaut werden.

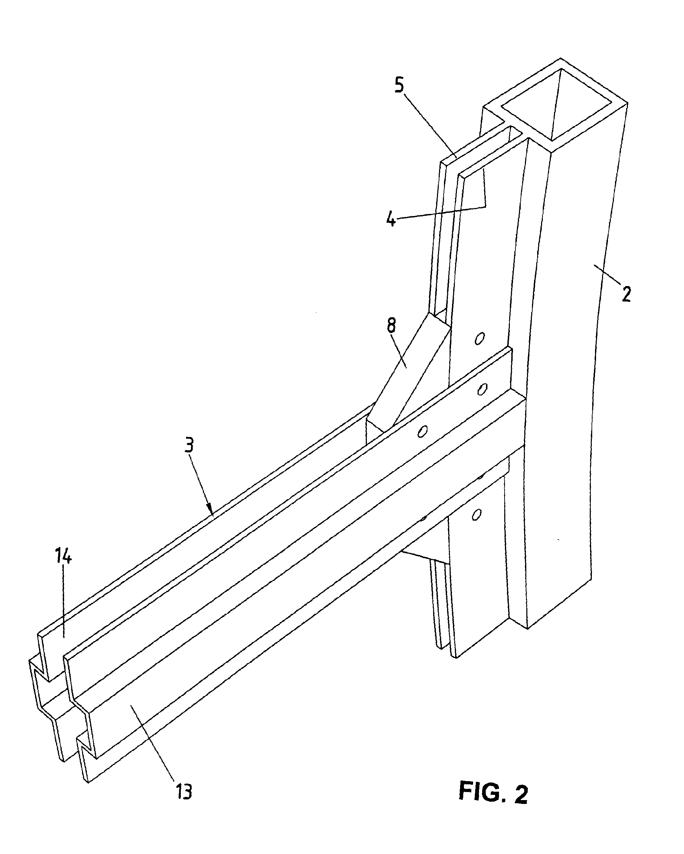

Wie aus Fig. 2 ersichtlich ist, kann eine gemäss Fig. 1 beschriebene Verbindung auch zwischen einem Hauptprofil 2 und Nebenprofilen 3 mittels eines Knotenbleches 8 erhalten werden, wenn das Hauptprofil 2 mit einer Biegung versehen ist. Dadurch können Gerippe für Kabinen hergestellt werden, die bombierte Flächen haben. Selbstverständlich können auch die Nebenprofile 3 mit Biegungen versehen sein.

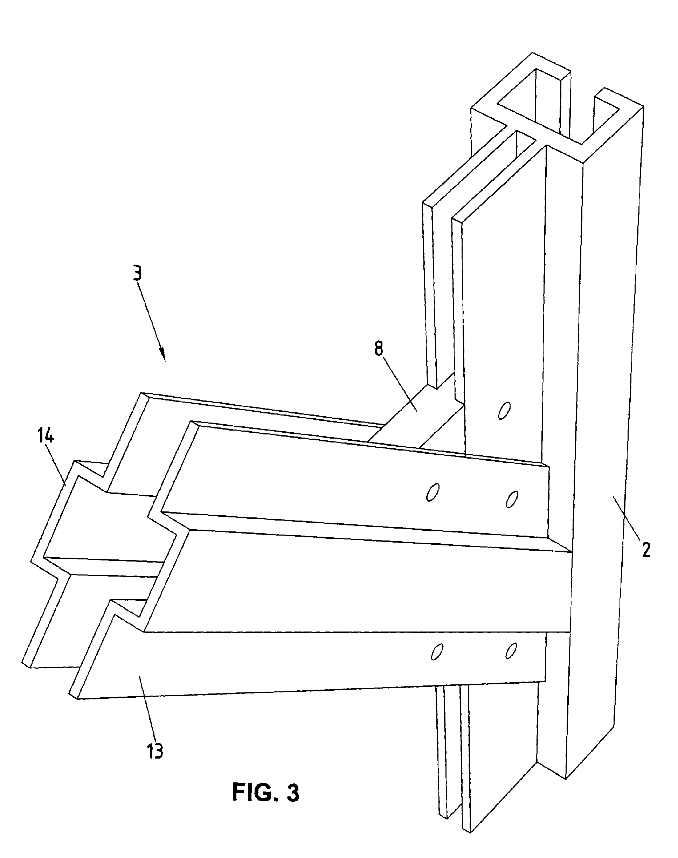

Fig. 3 zeigt eine Verbindung zwischen einem Hauptprofil 2 und einem Nebenprofil 3 über ein Knotenblech 8, wobei der Winkel zwischen dem Hauptprofil 2 und dem Nebenprofil 3 spitz ist.

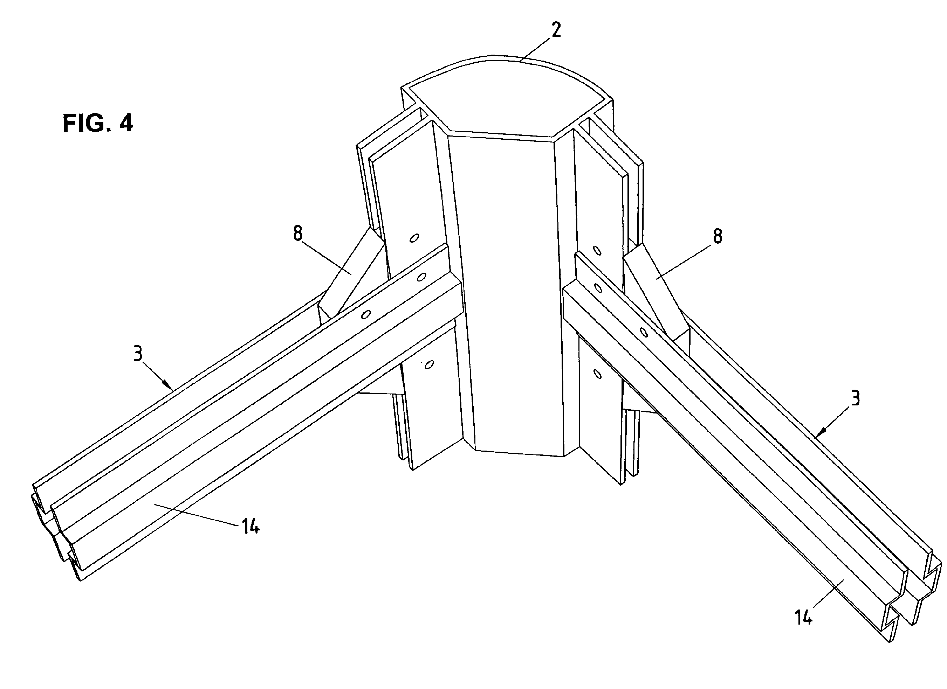

Fig. 4 zeigt ein Hauptprofil 2, das als Eckprofil ausgebildet ist, an welchem Nebenprofile 3 befestigt werden, die beispielsweise einen rechten Winkel einschliessen. Selbstverständlich muss dieser Winkel nicht rechtwinklig sein, das Hauptprofil 2 kann so geformt werden, dass ein beliebiger Winkel gebildet werden kann.

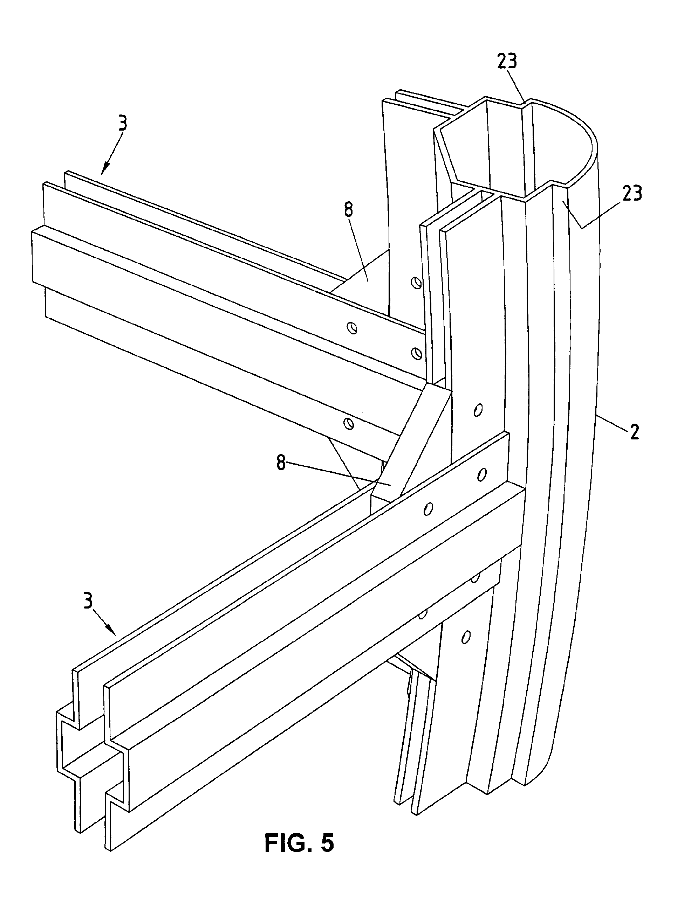

Fig. 5 zeigt ebenfalls ein Hauptprofil 2, das als Eckprofil ausgebildet ist, an welchem Nebenprofile 3 befestigt sind. Dieses Hauptprofil 2 kann mit einer Biegung versehen sein, ohne dass dies einen Einfluss auf die Verbindungen hat. Des weiteren weist dieses Hauptprofil 2 vorstehende Rippen 23 auf, die über die gemeinsamen Flächen, gebildet durch das Hauptprofil 2 und die Nebenprofile 3, auf welcher die plattenförmigen Elemente aufliegen, vorstehend sind. Dadurch können plattenförmige Elemente, beispielsweise Glasplatten, so in das Gerippe eingesetzt und beispielsweise verleimt werden, dass die Kanten an diesen Rippen 23 anstossen und somit geschützt sind. Selbstverständlich können derartige Rippen auch an den Nebenprofilen angebracht sein.

Zur Versteifung des Gerippes ist es auch möglich, zwischen die Stege der Hauptprofile und/oder zwischen die Profile, die die Nebenprofile bilden, Wabenbleche einzusetzen, die mit den entsprechenden Profilen verklebt oder vernietet werden können.

Des weiteren ist es ohne weiteres auch möglich, zwischen den Profilen, die die Nebenprofile bilden, Stege einzusetzen, was beispielsweise ebenfalls durch Vernietung erfolgen kann, wodurch diese Profile zu einem steifen Profil verbunden werden können.

Aus den Fig. 1 bis 5 sind unterschiedliche Hauptprofile 2 dargestellt, die verschiedene Querschnittsformen aufweisen. Diese Hauptprofile können in vielfacher Weise variiert werden, die Stege können auf gegenüberliegenden Seiten des Hauptprofils angebracht sein, sie können praktisch beliebige Winkel bilden, sie können eine Grundform haben, die als Hohlprofil ausgebildet ist, sie können aber auch ein geschlitztes Profil sein, durch die vielfältigen Möglichkeiten der Formgebung können diese an den gewünschten Verwendungszweck angepasst werden.

Mit der vorliegenden Erfindung können in einfacher Weise Gerippe für Kabinen, insbesondere für Fahrzeuge zum Transportieren von Personen, hergestellt werden, die vielfältige Formgebungen zulassen, und die steife und rüttelfeste Verbindungen ergeben.

## Patentansprüche

1. Kabine, insbesondere für Fahrzeuge zum Transportieren von Personen, welche Kabine ein Gerippe (1) von miteinander verbundenen Profilen umfasst, welche Profile aus Hauptprofilen (2) und Nebenprofilen (3) bestehen, und in welches Gerippe (1) plattenförmige Elemente als Wandung, Fenster und/oder Türen einsetzbar sind, **dadurch gekennzeichnet, dass** die Hauptprofile (2) mit mindestens einem Steg (4; 5) ausgestattet sind, an welchem Steg (4; 5) Knotenbleche (8) zur Verbindung mit benachbarten Profilen (2 bzw. 3) befestigbar sind, die eine erste Fläche (9) und eine zu dieser parallele, abgestufte Fläche (10) aufweisen, deren erste Fläche (9) im am Hauptprofil (2) befestigten Zustand an der einen Fläche (6; 7) des Steges (4; 5) anliegend ist und deren abgestufte Fläche (10) mit der anderen Fläche (11; 12) des Steges (4; 5) eine gemeinsame Fläche bildet, auf welche ein mit dem Hauptprofil (2) zu verbindendes Nebenprofil (3) aufliegt und mittels Verbindungsmittel (21) mit diesem über das Knotenblech (8) verbindbar ist.

2. Kabine nach Anspruch 1, **dadurch gekennzeichnet, dass** die miteinander verbundenen Hauptprofile (2) und Nebenprofile (3) so ausgestaltet sind, dass die Fläche der Hauptprofile (2) und die Fläche der Nebenprofile (3), auf welchen die plattenförmigen Elemente aufliegen, eine weitere gemeinsame Fläche bilden.

3. Kabine nach Anspruch 1 oder 2, **dadurch gekennzeichnet, dass** an den Hauptprofilen (2) jeweils mehrere Stege (4; 5) angeordnet sind, die bezüglich des entsprechenden Hauptprofils (2) einander gegenüberliegend sind und/oder einen Winkel bilden.

4. Kabine nach einem der Ansprüche 1 bis 3, **dadurch gekennzeichnet, dass** an den Hauptprofilen (2) zu jedem Steg (4) ein dazu parallel verlaufender, weiterer Steg (5) angebracht ist, dass die Knotenbleche (8) zwischen die beiden Stege (4, 5) einsetzbar sind, dass die Knotenbleche (8) beidseitig jeweils eine erste Fläche (9) und eine abgestufte Fläche (10) aufweisen und die abgestufte Fläche (10) mit den aussenliegenden Flächen (11 bzw. 12) des entsprechenden Steges (4 bzw. 5) jeweils eine gemeinsame Fläche bilden.

5. Kabine nach Anspruch 4, **dadurch gekennzeichnet, dass** die Nebenprofile (3) jeweils aus zwei Profilstücken (13, 14) gebildet sind, die bezüglich der zwischen den beiden Stegen (4, 5) angebrachten Knotenbleche (8) zueinander parallel verlaufend angebracht sind.

6. Kabine nach einem der Ansprüche 1 bis 5, **dadurch gekennzeichnet, dass** die Hauptprofile (2) im wesentlichen jeweils aus einem Hohlprofil bestehen, während die Nebenprofile (3) jeweils aus zwei U-Profilen mit an den beiden Schenkeln (15, 16) angebrachten flanschförmigen Vorsprüngen (17) gebildet sind.

7. Kabine nach einem der Ansprüche 1 bis 6, **dadurch gekennzeichnet, dass** die Verbindungsmittel aus Nieten (21) bestehen, die in an den Profilen (2, 3) und Knotenbleche (8) angebrachten Durchgangsbohrungen (20) einsetzbar sind.

8. Kabine nach einem der Ansprüche 5 bis 7, **dadurch gekennzeichnet, dass** die aus zwei Profilstücken (13, 14) gebildeten Nebenprofile (3) mit jeweils dazwischen eingesetzten Verbindungsstegen versteifbar sind.

9. Kabine nach einem der Ansprüche 1 bis 8, **dadurch gekennzeichnet, dass** die Hauptprofile (2) und/oder die Nebenprofile (3) in den gemeinsamen Flächen, auf welchen die plattenförmigen Elemente aufliegen, vorstehende Rippen (23) aufweisen, an welchen die eingesetzten plattenförmigen Elemente stirnseitig anstossen.

10. Kabine nach einem der Ansprüche 1 bis 9, **dadurch gekennzeichnet, dass** die Hauptprofile (2) und/oder die Nebenprofile (3) geradlinig verlaufen oder mit Biegungen versehen sind.
